# EUROPEAN PATENT SPECIFICATION

(11) **EP 3 428 736 B1**
(45) Date of publication and mention of the grant of the patent: **14.02.2024**
(21) Application number: 17763171.0
(22) Date of filing: 06.03.2017
(51) Int. Cl.: G03G 21/16, B41J 29/13, B65H 31/02, H04N 1/00

(54) **IMAGE FORMING DEVICE**
BILDERZEUGUNGSVORRICHTUNG
DISPOSITIF DE FORMATION D'IMAGE

(30) Priority: 09.03.2016 JP 2016045694; 28.02.2017 JP 2017035720
(43) Date of publication of application: 16.01.2019
(73) Proprietor: Canon Kabushiki Kaisha, Tokyo 146-8501 (JP)
(72) Inventor: MIYAKAWA Shogo, Tokyo 146-8501 (JP); TAKEUCHI Masaaki, Tokyo 146-8501 (JP)
(74) Representative: TBK
(86) International application number: PCT/JP2017/008759
(87) International publication number: WO 2017/154831

(56) References cited:
- JP-A- H1 195 515
- JP-A- 2000 112 198
- JP-A- 2007 017 834
- JP-A- 2009 300 930
- JP-A- 2012 027 256
- JP-A- 2015 170 811
- US-A1- 2009 122 330

## Description

### [Technical Field]

The present invention relates to an image forming apparatus such as an electrophotographic copying machine, an electrophotographic printer (a laser beam printer, an LED printer or the like, for example), an inkjet printer, or a facsimile apparatus, for example.

### [Background Art]

There is an image forming apparatus which includes an openable and closable member, which is openable and closable with respect to an apparatus main body, such as a door which opens and closes an opening for mounting or removing a process cartridge, for example. Such a configuration is disclosed in JP 2009 - 300 930 A, for example. Further, a configuration is known where a discharge tray for stacking sheets discharged from the inside of an image forming apparatus also functions as such an openable and closable member.

Such an openable and closable member may be opened by a user unintentionally. Particularly, in the case where the discharge tray also functions as the openable and closable member, a user may open the discharge tray unintentionally at the time of removing a sheet on the discharge tray or of handling an extension tray which extends the length of the discharge tray.

When the openable and closable member is erroneously opened during operation of the image forming apparatus, the operation of the apparatus is stopped and, as a result, a sheet under conveyance stays in the image forming apparatus. Accordingly, to restart operation of the image forming apparatus, it is necessary to remove a sheet staying in the inside of the apparatus, and to turn the apparatus on again.

In view of the above, conventionally, a configuration is proposed which prevents a user from opening an openable and closable member unintentionally. For example, JP H1 1 - 69 046 A describes the following configuration. The configuration where a discharge tray also functions as an openable and closable member is provided with a stopper which prevents the discharge tray from being opened, and the stopper is caused to abut against an image reading unit provided at an upper portion of an image forming apparatus thus preventing the discharge tray from being opened. In the configuration described in JP H11 - 69 046 A, pivoting the image reading unit in a horizontal direction causes the stopper and the image reading unit to separate from each other so that the discharge tray is brought into an unlocked state wherein the discharge tray can be opened. US 2009 / 0 122 330 A1 discloses an image forming apparatus in which an image reading apparatus is positioned on an upper cover part and provided with a locking mechanism for preventing the upper cover part from opening during opening of a document pressing part in a sliding-moving region of the image reading apparatus when the document pressing part and the upper cover part are opened and closed in same direction

### [Summary of Invention]

### [Technical Problem]

However, in the configuration described in JP H11 - 69 046 A, for an image forming apparatus with an increase in size, the distance between the image reading unit and the discharge tray increases. When the distance between the openable and closable member and a member against which the stopper abuts increases as described above, it is necessary to increase the size of the stopper and hence, component cost increases.

The present invention has been made under such circumstances, and it is an object of the present invention to provide an image forming apparatus where a stopper with a small size can prevent a user from opening an openable and closable member unintentionally.

### [Solution to Problem]

The above-mentioned object is solved by an image forming apparatus according to claim 1. Further advantageous embodiments are disclosed in the dependent claims.

### [Advantageous Effects of Invention]

According to the present invention, a stopper with a small size can prevent a user from opening an openable and closable member unintentionally.

### [Brief Description of Drawings]

[FIG. 1]

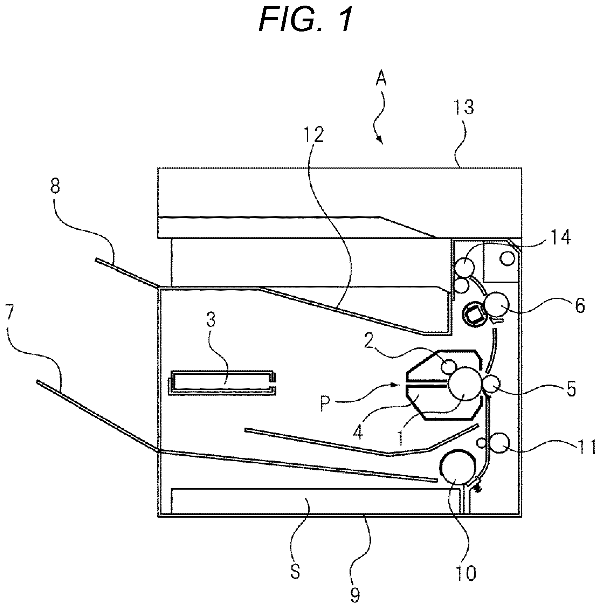

   FIG. 1 is a cross-sectional schematic view of an image forming apparatus according to a first embodiment.
[FIG. 2A]

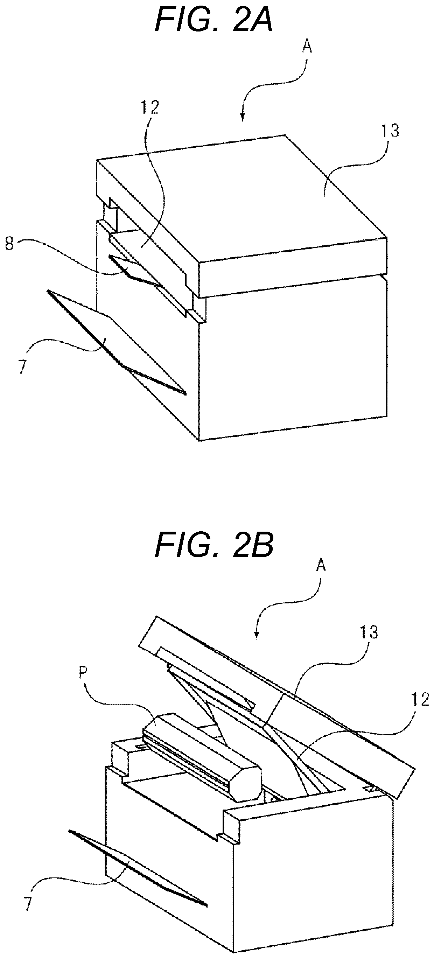

   FIG. 2A is a perspective view of the image forming apparatus according to the first embodiment.
[FIG. 2B]
   FIG. 2B is a perspective view of the image forming apparatus according to the first embodiment when an image reading portion is in an open position.
[FIG. 3A]

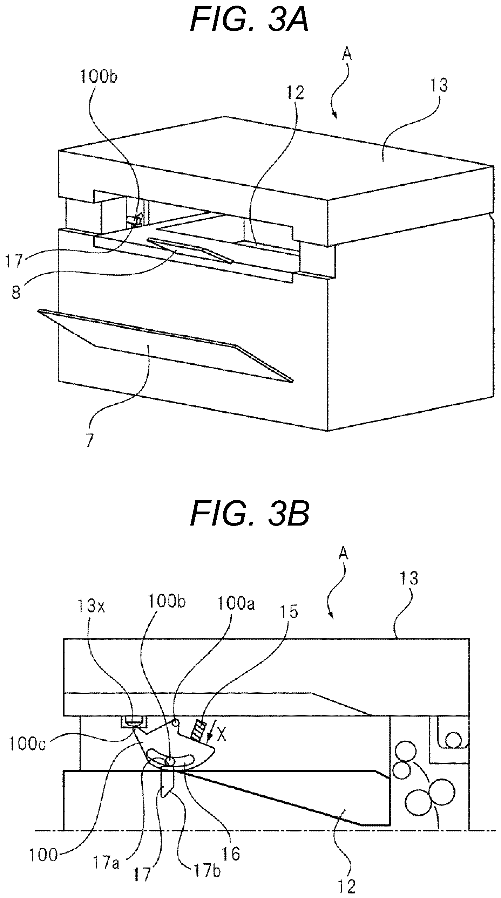

   FIG. 3A is a perspective view and of the image forming apparatus according to the first embodiment in a state where a discharge tray is closed.
[FIG. 3B]
   FIG. 3B is an enlarged cross-sectional view of an area in the vicinity of the discharge tray of the image forming apparatus according to the first embodiment.
[FIG. 4A]

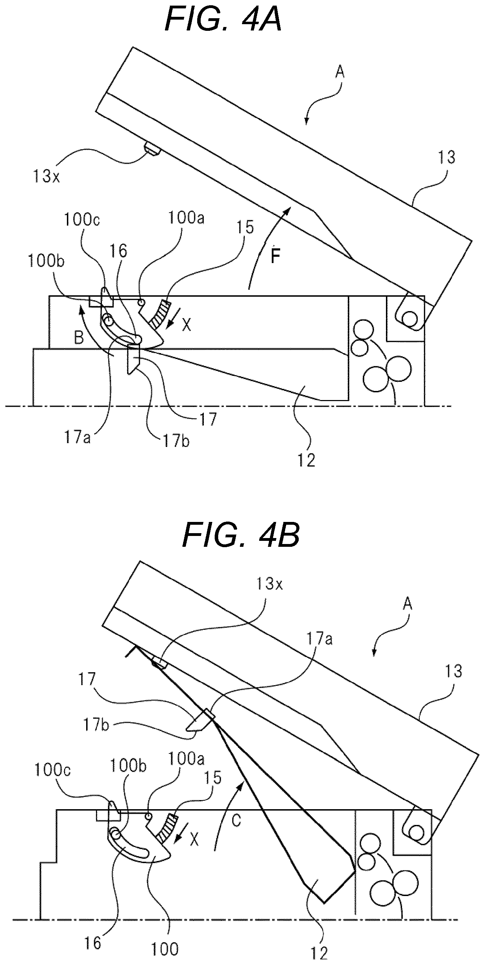

   FIG. 4A is a cross-sectional view for describing operation of opening the discharge tray according to the first embodiment.
[FIG. 4B]
   FIG. 4B is a cross-sectional view for describing the operation of opening the discharge tray according to the first embodiment.
[FIG. 5A]

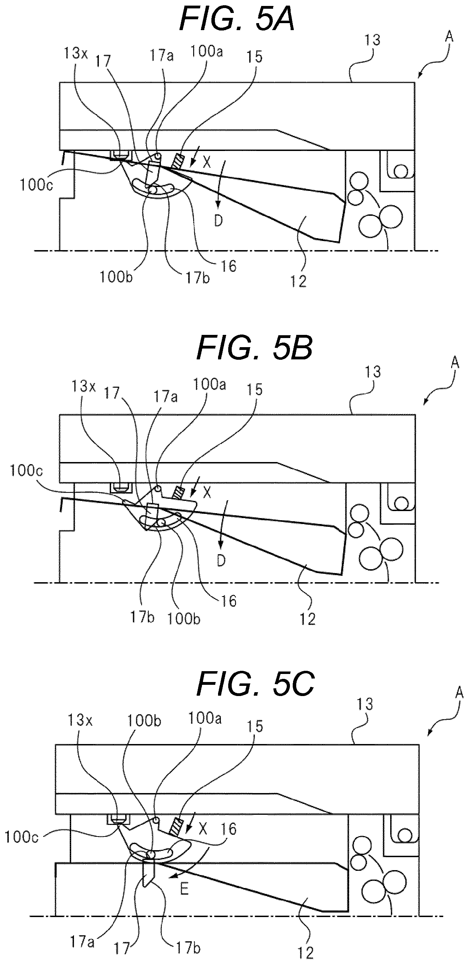

   FIG. 5A is a cross-sectional view for describing operation of closing the discharge tray according to the first embodiment.
[FIG. 5B]
   FIG. 5B is a cross-sectional view for describing the operation of closing the discharge tray according to the first embodiment.
[FIG. 5C]
   FIG. 5C is a cross-sectional view for describing the operation of closing the discharge tray according to the first embodiment.
[FIG. 6A]

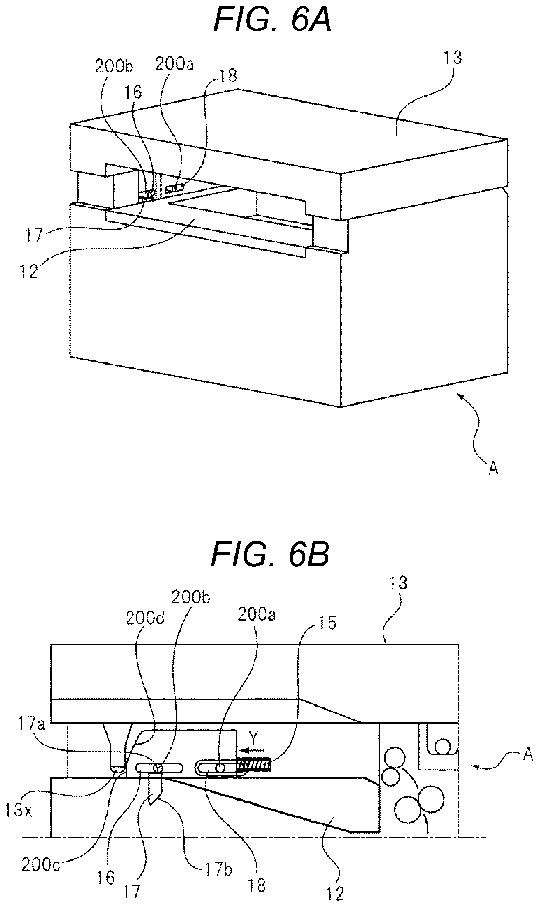

   FIG. 6A is a perspective view of an image forming apparatus according to a second embodiment in a state where a discharge tray is closed.
[FIG. 6B]
   FIG. 6B is a cross-sectional view of the image forming apparatus according to the second embodiment in a state where the discharge tray is closed.
[FIG. 7A]

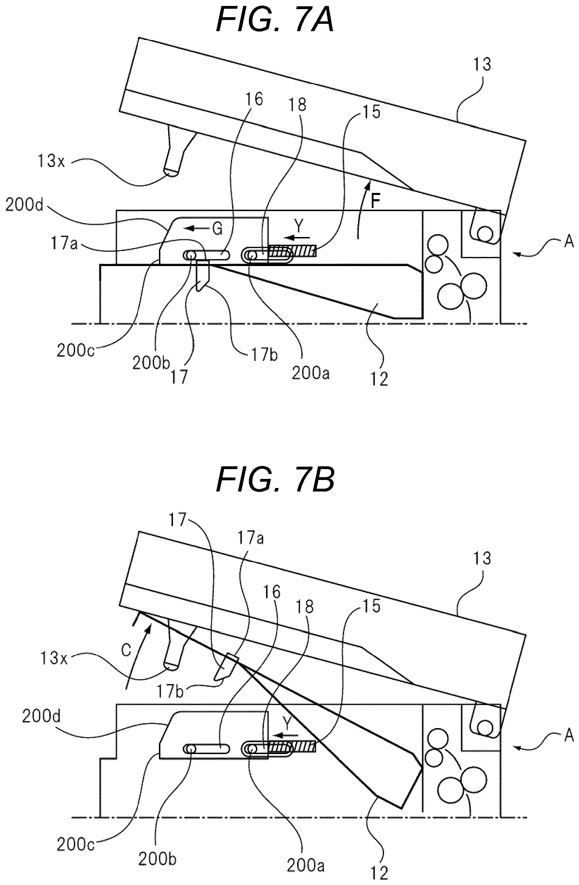

   FIG. 7A is a cross-sectional view for describing operation of opening the discharge tray according to the second embodiment.
[FIG. 7B]
   FIG. 7B is a cross-sectional view for describing the operation of opening the discharge tray according to the second embodiment.
[FIG. 8A]

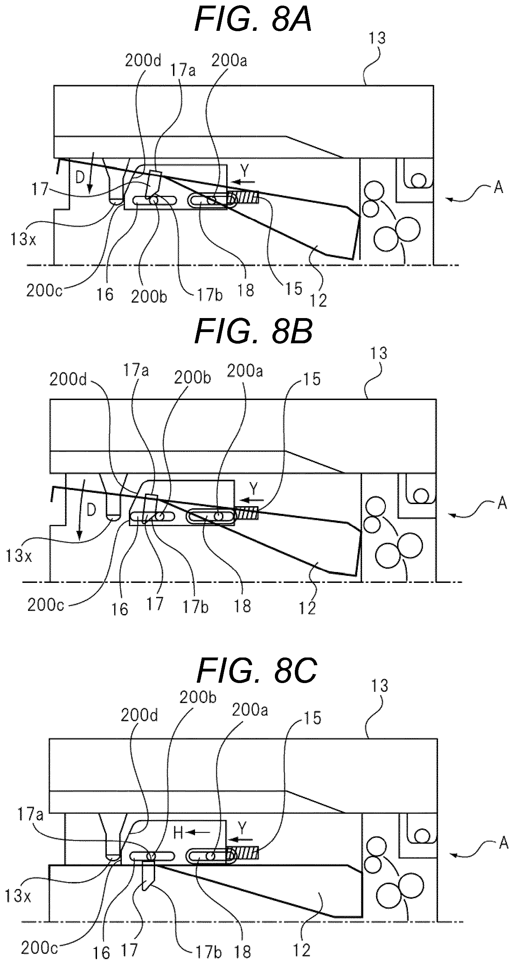

   FIG. 8A is a cross-sectional view for describing operation of closing the discharge tray according to the second embodiment.
[FIG. 8B]
   FIG. 8B is a cross-sectional view for describing the operation of closing the discharge tray according to the second embodiment.
[FIG. 8C]
   FIG. 8C is a cross-sectional view for describing the operation of closing the discharge tray according to the second embodiment.
[FIG. 9A]

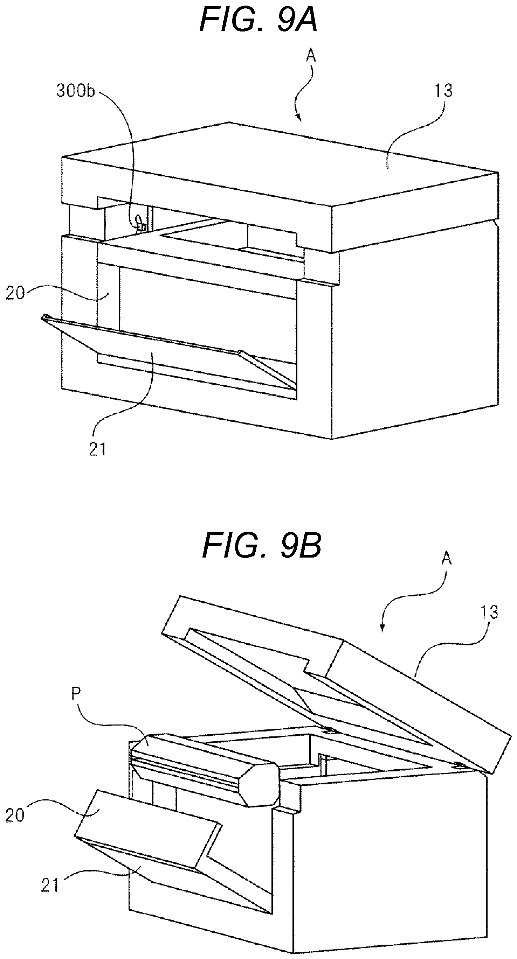

   FIG. 9A is a perspective view of an image forming apparatus according to a third embodiment.
[FIG. 9B]
   FIG. 9B is a perspective view of the image forming apparatus according to the third embodiment in a state where a cartridge door is open.
[FIG. 10A]

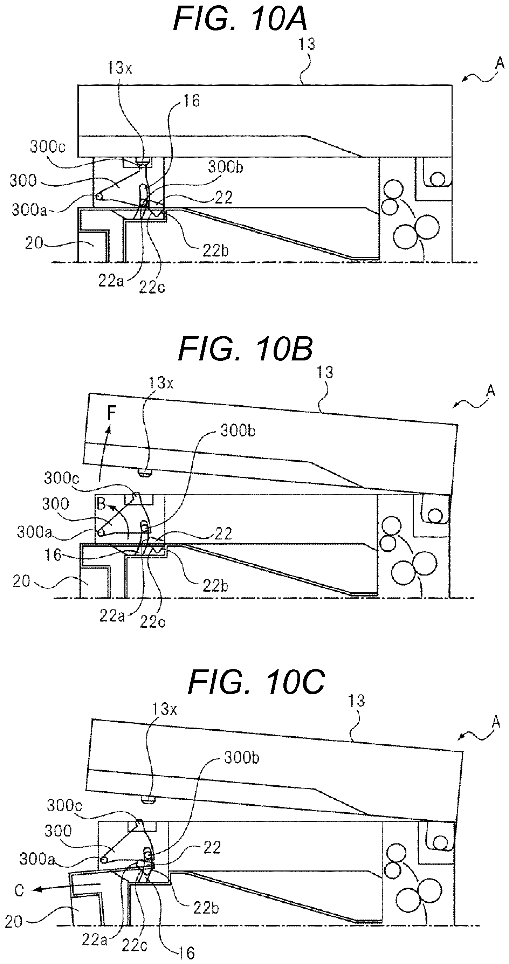

   FIG. 10A is a cross-sectional view for describing operation of opening the cartridge door according to the third embodiment.
[FIG. 10B]
   FIG. 10B is a cross-sectional view for describing the operation of opening the cartridge door according to the third embodiment.
[FIG. 10C]
   FIG. 10C is a cross-sectional view for describing the operation of opening the cartridge door according to the third embodiment.
[FIG. 11A]

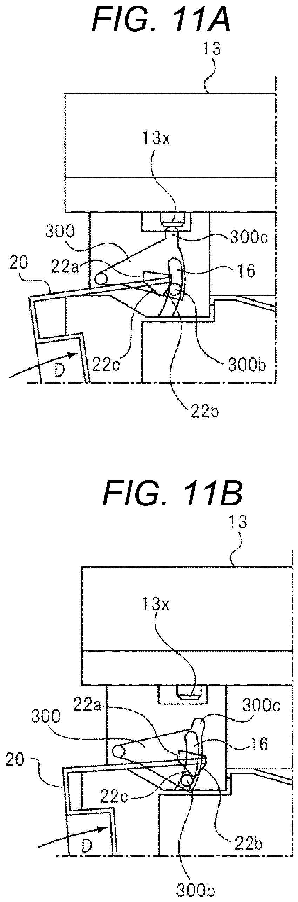

   FIG. 11A is a cross-sectional view for describing operation of closing the cartridge door according to the third embodiment.
[FIG. 11B]
   FIG. 11B is a cross-sectional view for describing the operation of closing the cartridge door according to the third embodiment.
[FIG. 11C]

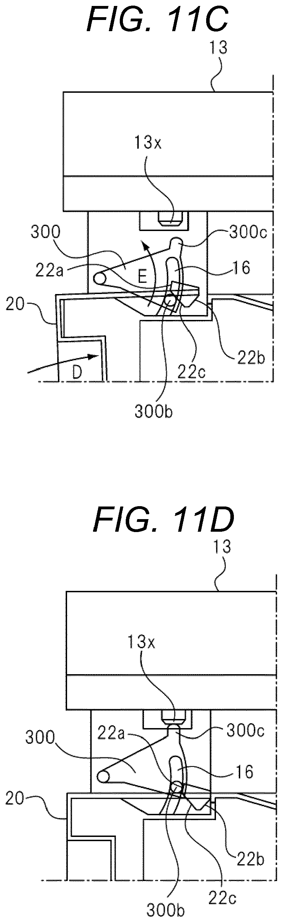

   FIG. 11C is a cross-sectional view for describing the operation of closing the cartridge door according to the third embodiment.
[FIG. 11D]
   FIG. 11D is a cross-sectional view for describing the operation of closing the cartridge door according to the third embodiment.
[FIG. 12]

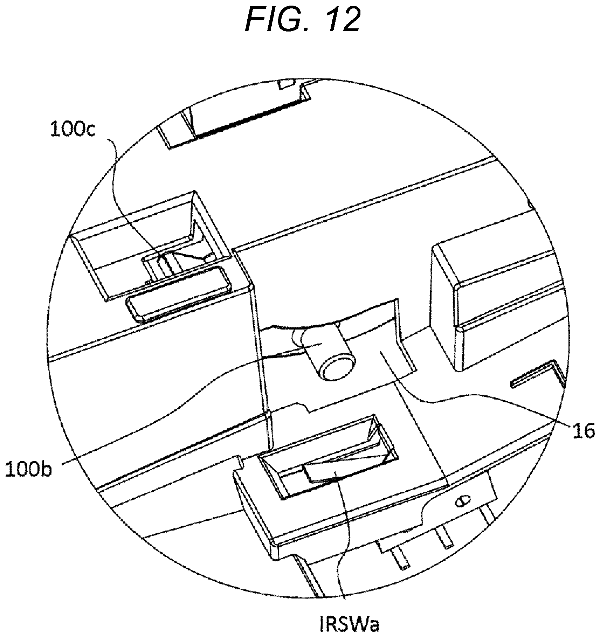

   FIG. 12 is a view showing a positional relationship between a stopper and an interlock switch according to the first embodiment.
[FIG. 13]

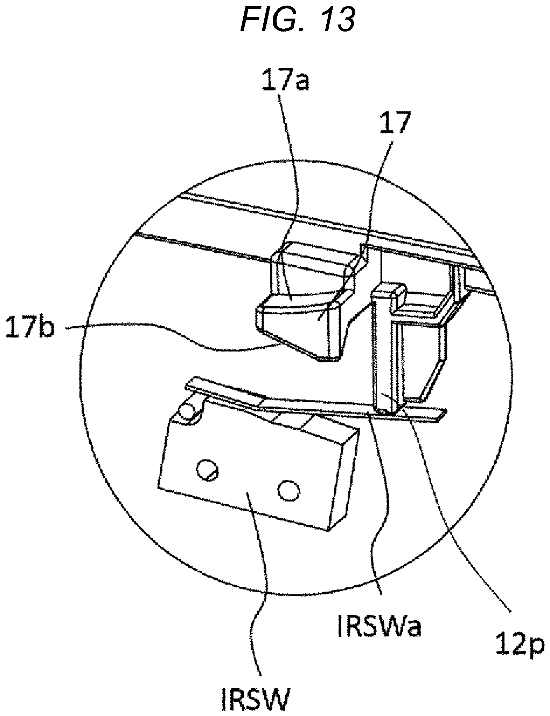

   FIG. 13 is a perspective view showing a relationship between a portion of the discharge tray and the interlock switch according to the first embodiment.
[FIG. 14]

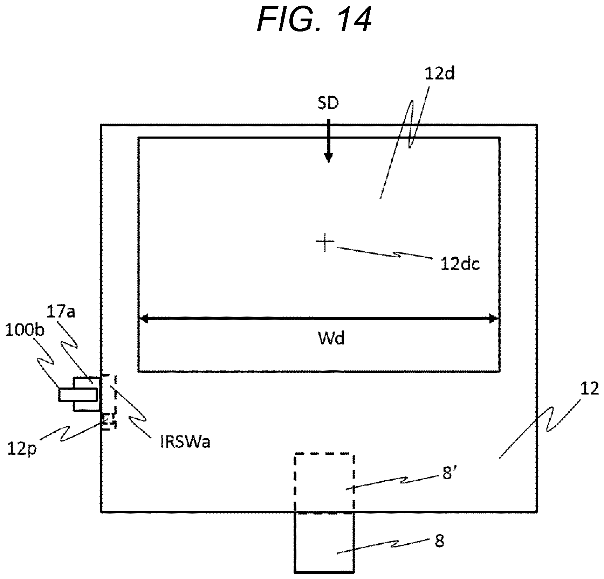

   FIG. 14 is a view showing a positional relationship between a movable arm portion of the interlock switch and a tray abutment portion of the stopper in a state where the discharge tray is closed.

### [Description of Embodiments]

### (First Embodiment)

### <Image forming apparatus>

Hereinafter, first, an overall configuration of an image forming apparatus A according to a first embodiment of the present invention will be described together with an operation performed at the time of forming an image with reference to drawings. Assume that the image forming apparatus A of this embodiment is an electrophotographic laser beam printer.

The image forming apparatus A includes: an image forming portion which transfers a toner image to a sheet (recording medium); an image reading portion 13 which reads an image of an original; a sheet feeding portion which supplies a sheet to the image forming portion; and a fixing portion which causes the toner image to be fixed on the sheet.

As shown in FIG. 1, the image forming portion includes a process cartridge P which is detachably mounted on a main body of the image forming apparatus A, a laser scanner unit 3, a transfer roller 5 and the like. The process cartridge P includes a photosensitive drum 1 (image carrier), a charging roller 2, a developing apparatus 4 and the like.

The image reading portion 13 which reads an image of an original is provided on an upper portion of the image forming apparatus A in a pivotable manner in an upward and downward direction with respect to the apparatus main body. That is, the image reading portion 13 is a member which is provided in a pivotally movable manner with respect to the apparatus main body, and is movable between a first position in which the image reading portion 13 is in an open position (see FIG. 2B) and a second position in which the image reading portion 13 is in a closed position.

In forming an image, when a control portion not shown in the drawing generates a print signal, a sheet S stacked in a sheet stacking portion 9 or a manual feed tray 7 is fed to the image forming portion by a feed roller 10 and a resist roller 11.

On the other hand, in the image forming portion, a charging bias is applied to the charging roller 2 so that a surface of the photosensitive drum 1 which comes into contact with the charging roller 2 is charged.

Thereafter, the laser scanner unit 3 emits a laser beam from a light source (not shown in the drawing) provided in the laser scanner unit 3 to irradiate the photosensitive drum 1. With such irradiation, a potential of the photosensitive drum 1 partially lowers so that an electrostatic latent image corresponding to image information is formed on the surface of the photosensitive drum 1.

Then, the developing apparatus 4 causes toner to be adhered to the electrostatic latent image formed on the surface of the photosensitive drum 1 to form a toner image. The toner image formed on the surface of the photosensitive drum 1 is fed to a transfer nip portion formed between the photosensitive drum 1 and the transfer roller 5. When the toner image arrives at the transfer nip portion, a transfer bias having an opposite polarity to the toner is applied to the transfer roller 5 so that the toner image is transferred to a sheet.

Thereafter, the sheet to which the toner image is transferred is fed to a fixing apparatus 6. The sheet is heated and compressed by a fixing nip portion formed between a heating portion and a compressing portion of the fixing apparatus 6 so that the toner image is fixed to the sheet. After such operations, the sheet is conveyed by a discharge roller 14 to be discharged to a discharge tray 12 disposed below the image reading portion 13.

A sliding-type extension tray 8 which extends a sheet stacking area in a sheet discharging direction is provided at a distal end of the discharge tray 12, and a user can adjust a length of the discharge tray 12 when necessary.

As shown in FIG. 2A and FIG. 2B, the image reading portion 13 and the discharge tray 12 are respectively supported in a pivotable manner with respect to the main body of the image forming apparatus A so that pivoting the image reading portion 13 and the discharge tray 12 allows these members to be opened and closed. When the discharge tray 12 is pivoted so as to bring the discharge tray 12 into an open state, the process cartridge P disposed in the image forming apparatus A can be accessed. That is, the discharge tray 12 in this embodiment also functions as an openable and closable member which is supported by the main body of the image forming apparatus A in a pivotable manner, and can be opened and closed by being pivoted.

An interlock switch IRSW which turns on and off in conjunction with opening and closing of the discharge tray 12 is provided in the inside of the main body of the image forming apparatus A. Accordingly, operation of the main body of the image forming apparatus A is stopped in a state where the discharge tray 12 is open. As shown in FIG. 12 and FIG. 14, the interlock switch IRSW is provided in the vicinity of a tray abutment portion 100b of a stopper 100 described later. FIG. 14 is a view showing a positional relationship between a movable arm portion IRSWa of the interlock switch IRSW and the tray abutment portion 100b of the stopper 100 described later in a state where the discharge tray 12 is closed. FIG. 14 is a view of the discharge tray 12 as viewed from the upper side in the vertical direction, wherein the illustration of the image reading portion 13 is omitted. As shown in FIG. 14, in a direction orthogonal to a sheet discharging direction SD (in a direction perpendicular to the paper surface in FIG. 1), the movable arm portion IRSWa (a movable portion for turning on and off the switch) of the interlock switch IRSW is disposed at a position closer to the tray abutment portion 100b than a center 12dc of a sheet stacking area (a recessed region of the tray) Wd of the discharge tray 12. To be more precise, the movable arm portion IRSWa of the interlock switch IRSW is disposed at a position closer to the tray abutment portion 100b than the sheet stacking area Wd of the discharge tray 12. In FIG. 14, numeral 8' indicates a state where the extension tray 8 is slid thus being accommodated in the discharge tray 12.

The image reading portion 13 and the discharge tray 12 are provided so as not to interfere with each other in a state where the image reading portion 13 is positioned in a closed position, and the discharge tray 12 is closed.

### <Stopper>

Next, the stopper 100 (stopper member) for preventing a user from erroneously opening the discharge tray 12 unintentionally will be described. FIG. 3A is a perspective view of the image forming apparatus A in a state where the discharge tray 12 is closed, and FIG. 3B is an enlarged cross-sectional view of an area in the vicinity of the discharge tray 12.

As shown in FIG. 3B, the stopper 100 is supported by the image forming apparatus A in a pivotable manner about a rotary shaft 100a, and is biased by a spring 15 forming a biasing means in a direction indicated by arrow X. The stopper 100 also includes the tray abutment portion 100b provided so as to pass through a hole portion 16 formed in the main body of the image forming apparatus A. The stopper 100 also includes an abutment portion 100c which abuts against or separates from a stopper abutment portion 13x formed on the image reading portion 13.

The discharge tray 12 includes a stopper receiving portion 17, and the stopper receiving portion 17 includes an abutment portion 17a and an inclined surface 17b. FIG. 13 is a perspective view showing a relationship between a portion of the discharge tray 12 and the interlock switch IRSW. As shown in FIG. 13, the discharge tray 12 also includes, in addition to the stopper receiving portion 17, a pushing portion 12p which pushes the movable arm portion IRSWa of the interlock switch IRSW. FIG. 13 shows a state where the discharge tray 12 is closed with respect to the main body of the image forming apparatus A so that the pushing portion 12p pushes the movable arm portion IRSWa wherein the interlock switch IRSW is in an ON state (a state shown in FIG. 5C described later).

As shown in FIG. 3B, in a state where the discharge tray 12 and the image reading portion 13 are closed, the abutment portion 17a of the stopper receiving portion 17 and the tray abutment portion 100b of the stopper 100 abut against each other so that pivoting of the discharge tray 12 is restricted. The stopper abutment portion 13x which the image reading portion 13 includes and the abutment portion 100c of the stopper 100 abut against each other so that pivoting of the stopper 100 is also restricted. Accordingly, in a state where the discharge tray 12 and the image reading portion 13 are closed, the stopper 100 is positioned in a restricting position in which the stopper 100 restricts a movement of the discharge tray (openable and closable member) 12 from a closed position to an open position. Therefore, the discharge tray 12 is held in a closed state.

### <Opening and closing operation of discharge tray>

Next, operation of opening and closing the discharge tray 12 will be described. First, operation of opening the discharge tray 12 will be described with reference to FIG. 4A and FIG. 4B.

As shown in FIG. 4A, when the image reading portion 13 is pivoted first in a direction indicated by arrow F from a closed state thus being moved to an open position, the stopper abutment portion 13x separates from the abutment portion 100c of the stopper 100. With such separation, the stopper 100 pivots in a direction indicated by arrow B due to a biasing force of the spring 15 in the X direction so that the tray abutment portion 100b also moves inside the hole portion 16 in the direction indicated by arrow B. With such movement, the tray abutment portion 100b and the abutment portion 17a of the stopper receiving portion 17 separate from each other.

When the tray abutment portion 100b and the abutment portion 17a of the stopper receiving portion 17 separate from each other, locking of the discharge tray 12 which is caused by the stopper 100 is unlocked so that the discharge tray 12 is brought into an openable state. That is, in conjunction with operation of opening the image reading portion 13, the stopper 100 moves to a position in which the stopper 100 brings the discharge tray 12 into an openable state (allowing position). Accordingly, as shown in FIG. 4B, causing the discharge tray 12 to pivot in a direction indicated by arrow C allows the discharge tray 12 to be opened.

Next, operation of closing the discharge tray 12 and the image reading portion 13 will be described.

Operation of closing the discharge tray 12 first and, then, closing the image reading portion 13 will be described. This operation is reverse of the above-mentioned operation of opening the discharge tray 12. That is, when the discharge tray 12 is closed and, thereafter, the image reading portion 13 is closed, the stopper abutment portion 13x of the image reading portion 13 pushes the abutment portion 100c of the stopper 100 so that the stopper 100 moves. When the image reading portion 13 moves to a closed position, a state is brought about where the tray abutment portion 100b and the abutment portion 17a of the stopper receiving portion 17 abut against each other so that pivoting of the discharge tray 12 is restricted. With such a restriction, the discharge tray 12 is held in a closed state.

Next, operation of closing the image reading portion 13 and, thereafter, closing the discharge tray 12 will be described with reference to FIG. 5A, FIG. 5B and FIG. 5C. As shown in FIG. 5A, when the image reading portion 13 is closed first, the abutment portion 100c of the stopper 100 is pushed by the stopper abutment portion 13x of the image reading portion 13 so that the stopper 100 moves to a restricting position. Causing the discharge tray 12 to pivot in a direction indicated by arrow D in such a state allows the inclined surface 17b of the stopper receiving portion 17, which the discharge tray 12 includes, and the tray abutment portion 100b to abut against each other.

When the discharge tray 12 is further pivoted in the direction indicated by arrow D, as shown in FIG. 5B, the tray abutment portion 100b receives a force from the inclined surface 17b to move along the inclined surface 17b. At this time of operation, the stopper abutment portion 13x of the image reading portion 13 and the abutment portion 100c of the stopper 100 temporarily separate from each other.

When the discharge tray 12 is further pivoted in the direction indicated by arrow D so that the discharge tray 12 is pivoted to a closed state, as shown in FIG. 5C, the stopper receiving portion 17 moves to the position below the hole portion 16. With such movement, the stopper 100 pivots in a direction indicated by arrow E due to a biasing force of the spring 15 in the X direction. With such an operation, the stopper abutment portion 13x of the image reading portion 13 and the abutment portion 100c of the stopper 100 abut against each other again so that pivoting of the stopper 100 is restricted. When the stopper 100 is in a position in which pivoting of the stopper 100 is restricted, a state is brought about where the tray abutment portion 100b and the abutment portion 17a of the stopper receiving portion 17 abut against each other. Due to such abutment, pivoting of the discharge tray 12 is restricted, and the discharge tray 12 is held in a closed state. As described above, when the discharge tray is moved toward a closed position from a state where the stopper 100 is positioned in a restricting position and the discharge tray 12 is in an open position, the stopper 100 moves from the restricting position and, upon arrival of the discharge tray 12 into the closed position, the stopper 100 returns into the restricting position. FIG. 12 is a perspective view in a state where the stopper 100 is in a position shown in FIG. 5C. In FIG. 12, the discharge tray 12 and the image reading portion 13 are omitted. As described previously, in a state shown in FIG. 5C, the interlock switch IRSW is in an ON state (see FIG. 13).

As described above, the stopper 100 is configured to be movable in conjunction with the movement of the image reading portion 13 so that the stopper 100 with a small size can prevent a user from opening the discharge tray 12 unintentionally. Accordingly, manufacturing cost of the stopper 100 can be reduced.

Further, it is possible to prevent that a user opens the discharge tray 12 unintentionally and, as a result, operation of the image forming apparatus A stops. Accordingly, it becomes unnecessary to perform removal of a sheet staying due to stopping of the operation.

This configuration does not have a biasing force for biasing the discharge tray 12 in the opening direction and hence, when the image reading portion 13 moves to an open position, a closed state of the discharge tray 12 can be maintained. Accordingly, a sheet can be easily removed when the sheet is on the discharge tray 12.

By providing the inclined surface 17b on the stopper receiving portion 17, the configuration is adopted where the discharge tray 12 is movable to a closed position in a state where the image reading portion 13 is closed and the stopper 100 is in a restricting position. Accordingly, either of the image reading portion 13 or the discharge tray 12 may be closed first. Therefore, a user is not required to pay attention to the order of handling and hence, usability is enhanced.

The image reading portion 13 is configured to be movable in the upward and downward direction. Accordingly, compared to a configuration where the image reading portion 13 is moved in a horizontal direction, an operation space for bringing the discharge tray into an openable state can be reduced in size.

Further, as described previously, in a direction (a direction perpendicular to the paper surface in FIG. 1) orthogonal to the sheet discharging direction SD, the movable arm portion IRSWa of the interlock switch IRSW is disposed at a position closer to the tray abutment portion 100b than the center 12dc of the sheet stacking area Wd of the discharge tray 12. With such a configuration, compared to the case where the movable arm portion IRSWa is disposed at a position farther away from the tray abutment portion 100b than the center 12dc of the sheet stacking area Wd, it is possible to suppress that the interlock switch IRSW is carelessly turned off. It is more preferable that the movable arm portion IRSWa be disposed at a position closer to the tray abutment portion 100b than the sheet stacking area Wd of the discharge tray 12 as in the case of this embodiment.

In this embodiment, the spring 15 is used for biasing the stopper 100. However, the present invention is not limited to such a configuration. Substantially the same advantageous effects can be acquired even if the self-weight of the stopper 100 is utilized.

### (Second Embodiment)

Next, a configuration of an image forming apparatus A according to a second embodiment of the present invention will be described. Components substantially equal to corresponding components which have been described in the above-mentioned first embodiment are given the same symbols, and the description of such components is omitted.

### <Stopper>

First, a configuration of a stopper 200 (stopper member) according to this embodiment will be described. FIG. 6A is a perspective view of the image forming apparatus A in a state where a discharge tray 12 is closed, and FIG. 6B is an enlarged cross-sectional view of an area in the vicinity of the discharge tray 12.

As shown in FIG. 6A and FIG. 6B, the stopper 200 is configured such that the stopper 200 has a guide boss 200a, and the guide boss 200a is engaged with a guide hole 18 formed in a main body of the image forming apparatus A thus being movable in a sliding manner. Further, the stopper 200 is biased by a spring 15 (biasing means) in a direction indicated by arrow Y. The stopper 200 also includes a tray abutment portion 200b provided so as to pass through a hole portion 16 formed in the main body of the image forming apparatus A. The stopper 200 also includes an abutment portion 200c which abuts against or separates from a stopper abutment portion 13x formed on the image reading portion 13. The stopper 200 also has an inclined surface 200d.

As shown in FIG. 6B, in a state where the discharge tray 12 and the image reading portion 13 are closed, the abutment portion 17a of the stopper receiving portion 17 and the tray abutment portion 200b of the stopper 200 abut against each other so that pivoting of the discharge tray 12 is restricted. The stopper abutment portion 13x which the image reading portion 13 includes and the abutment portion 200c of the stopper 200 abut against each other so that movement of the stopper 200 is also restricted. Accordingly, in a state where the discharge tray 12 and the image reading portion 13 are closed, the stopper 200 is positioned in a restricting position in which the stopper 200 holds a state where the discharge tray 12 is closed. Therefore, the discharge tray 12 is held in a closed state.

### <Opening and closing operation of discharge tray>

Next, operation of opening and closing the discharge tray 12 will be described. First, operation of opening the discharge tray 12 will be described with reference to FIG. 7A and FIG. 7B.

As shown in FIG. 7A, when the image reading portion 13 is pivoted first in a direction indicated by arrow F from a closed state, the stopper abutment portion 13x separates from the abutment portion 200c of the stopper 200. With such separation, the stopper 200 moves in a direction indicated by arrow G in a sliding manner due to a biasing force of the spring 15 in a Y direction so that the tray abutment portion 200b also moves inside the hole portion 16 in the direction indicated by arrow G. With such movement, the tray abutment portion 200b and the abutment portion 17a of the stopper receiving portion 17 separate from each other.

When the tray abutment portion 200b and the abutment portion 17a of the stopper receiving portion 17 separate from each other, locking of the discharge tray 12 which is caused by the stopper 200 is unlocked so that the discharge tray 12 is brought into an openable state. That is, in conjunction with operation of opening the image reading portion 13, the stopper 200 moves to a position in which the stopper 200 brings the discharge tray 12 into an openable state. Accordingly, as shown in FIG. 7B, causing the discharge tray 12 to pivot in a direction indicated by arrow C allows the discharge tray 12 to be opened.

Next, operation of closing the discharge tray 12 and the image reading portion 13 will be described.

Operation of closing the discharge tray 12 first and, then, closing the image reading portion 13 will be described. This operation is reverse of the above-mentioned operation of opening the discharge tray 12. That is, when the discharge tray 12 is closed and, thereafter, the image reading portion 13 is closed, the stopper abutment portion 13x of the image reading portion 13 pushes the abutment portion 200c while moving downward along the inclined surface 200d of the stopper 200 so that the stopper 200 moves. When the image reading portion 13 moves to a closed position, a state is brought about where the tray abutment portion 200b and the abutment portion 17a of the stopper receiving portion 17 abut against each other so that pivoting of the discharge tray 12 is restricted. With such a restriction, the discharge tray 12 is held in a closed state.

Next, operation of closing the image reading portion 13 and, thereafter, closing the discharge tray 12 will be described with reference to FIG. 8A, FIG. 8B and FIG. 8C. As shown in FIG. 8A, when the image reading portion 13 is closed first, the abutment portion 200c of the stopper 200 is pushed by the stopper abutment portion 13x of the image reading portion 13 so that the stopper 200 moves to a restricting position. Causing the discharge tray 12 to pivot in a direction indicated by arrow D in such a state allows the inclined surface 17b of the stopper receiving portion 17, which the discharge tray 12 includes, and the tray abutment portion 200b abut against each other.

When the discharge tray 12 is further pivoted in the direction indicated by arrow D, as shown in FIG. 8B, the tray abutment portion 200b receives a force from the inclined surface 17b to move along the inclined surface 17b. At this time of operation, the stopper abutment portion 13x of the image reading portion 13 and the abutment portion 200c of the stopper 200 temporarily separate from each other.

When the discharge tray 12 is further pivoted in the direction indicated by arrow D so that the discharge tray 12 is pivoted to a closed state, as shown in FIG. 8C, the stopper receiving portion 17 moves to the position below the hole portion 16. With such movement, the guide boss 200a of the stopper 200 moves in a direction indicated by arrow H along the guide hole 18 due to a biasing force of the spring 15 in the Y direction. With such movement, the stopper abutment portion 13x of the image reading portion 13 and the abutment portion 200c of the stopper 200 abut against each other again so that movement of the stopper 200 is restricted. When the stopper 200 is in a position in which movement of the stopper 200 is restricted, a state is brought about where the tray abutment portion 200b and the abutment portion 17a of the stopper receiving portion 17 abut against each other. Due to such abutment, pivoting of the discharge tray 12 is restricted, and the discharge tray 12 is held in a closed state.

As described above, the stopper 200 is configured to be movable in conjunction with the movement of the image reading portion 13 so that the stopper 200 with a small size can prevent a user from opening the discharge tray 12 unintentionally. Accordingly, manufacturing cost of the stopper 200 can be reduced.

Further, it is possible to prevent that a user opens the discharge tray 12 unintentionally and, as a result, operation of the image forming apparatus A stops. Accordingly, it becomes unnecessary to perform removal of a sheet staying due to stopping of the operation.

This configuration does not have a biasing force for biasing the discharge tray 12 in the opening direction and hence, when the image reading portion 13 moves to an open position, a closed state of the discharge tray 12 can be maintained. Accordingly, a sheet can be easily removed when the sheet is on the discharge tray 12.

By providing the inclined surface 17b on the stopper receiving portion 17, the configuration is adopted where the discharge tray 12 is movable to a closed position in a state where the image reading portion 13 is closed and the stopper 200 is in a restricting position. Accordingly, either of the image reading portion 13 or the discharge tray 12 may be closed first. Therefore, a user is not required to pay attention to the order of handling and hence, usability is enhanced.

The image reading portion 13 is configured to be movable in the upward and downward direction. Accordingly, compared to a configuration where the image reading portion 13 is moved in a horizontal direction, an operation space for bringing the discharge tray 12 into an openable state can be reduced in size.

In this embodiment, the spring 15 is used for biasing the stopper 200. However, substantially the same advantageous effects can be acquired even if a configuration is adopted where the guide hole 18 is angled so that the stopper 200 is biased by the self-weight of the stopper 200.

### (Third Embodiment)

Next, a configuration of an image forming apparatus A according to a third embodiment of the present invention will be described. Components substantially equal to corresponding components which have been described in the above-mentioned first embodiment and second embodiment are given the same symbols, and the description of such components is omitted.

In this embodiment, the description is made by taking a cartridge door 20, which is opened and closed at the time of mounting or removing a process cartridge P, as an example of an openable and closable member.

First, the configuration of the image forming apparatus A of this embodiment will be described. As shown in FIG. 9A and FIG. 9B, the image reading portion 13 and the cartridge door 20 are respectively supported on the main body of the image forming apparatus A in a pivotable manner so that pivoting the image reading portion 13 and the cartridge door 20 allows these members to be opened and closed. When the cartridge door 20 is pivoted so as to bring the cartridge door 20 into an open state, the process cartridge P disposed in the image forming apparatus A can be accessed. That is, the cartridge door 20 in this embodiment forms an openable and closable member which is supported in a pivotable manner with respect to the main body of the image forming apparatus A, and can be opened and closed by being pivoted.

The image reading portion 13 and the cartridge door 20 are provided so as not to interfere with each other in a state where the image reading portion 13 is positioned in a closed position, and the cartridge door 20 is closed.

As shown in FIG. 9B, the cartridge door 20 and a manual feed tray 21 can pivot as an integral body.

### <Stopper>

Next, a stopper 300 (stopper member) according to this embodiment will be described. FIG. 10A is an enlarged cross-sectional view of an area in the vicinity of the cartridge door 20 in a state where the cartridge door 20 is closed.

As shown in FIG. 10A, the stopper 300 is supported by the main body of the image forming apparatus A in a pivotable manner about a rotary shaft 300a, and is biased by a spring (biasing means) not shown in the drawing. The stopper 300 also includes a tray abutment portion 300b provided so as to pass through a hole portion 16 formed in the main body of the image forming apparatus A. The stopper 300 also includes an abutment portion 300c which abuts against or separates from a stopper abutment portion 13x formed on the image reading portion 13.

The cartridge door 20 includes a stopper receiving portion 22, and the stopper receiving portion 22 includes an abutment portion 22a, an inclined surface 22b, and an inclined surface 22c.

As shown in FIG. 10A, in a state where the cartridge door 20 and the image reading portion 13 are closed, the abutment portion 22a of the stopper receiving portion 22 and the tray abutment portion 300b of the stopper 300 abut against each other so that pivoting of the cartridge door 20 is restricted. The stopper abutment portion 13x which the image reading portion 13 includes and the abutment portion 300c of the stopper 300 abut against each other so that pivoting of the stopper 300 is restricted. Accordingly, in a state where the cartridge door 20 and the image reading portion 13 are closed, the stopper 300 is positioned in a restricting position in which the stopper 300 holds a state where the cartridge door 20 is closed. Therefore, the cartridge door 20 is held in a closed state.

### < Opening and closing operation of cartridge door>

Next, operation of opening and closing the cartridge door 20 will be described. First, operation of opening the cartridge door 20 will be described.

As shown in FIG. 10B, when the image reading portion 13 is pivoted first in a direction indicated by arrow F from a closed state, the stopper abutment portion 13x separates from the abutment portion 300c of the stopper 300. With such separation, the stopper 300 biased by a spring not shown in the drawing pivots in a direction indicated by arrow B so that the tray abutment portion 300b also moves inside the hole portion 16 in the direction indicated by arrow B. With such movement, the tray abutment portion 300b and the abutment portion 22a of the stopper receiving portion 22 separate from each other.

When the tray abutment portion 300b and the abutment portion 22a of the stopper receiving portion 22 separate from each other, locking of the cartridge door 20 which is caused by the stopper 300 is unlocked so that the cartridge door 20 is brought into an openable state. That is, in conjunction with operation of opening the image reading portion 13, the stopper 300 moves to a position in which the stopper 300 brings the cartridge door 20 into an openable state. Accordingly, as shown in FIG. 10C, causing the cartridge door 20 to pivot in a direction indicated by arrow C allows the cartridge door 20 to be opened.

Next, operation of closing the cartridge door 20 and the image reading portion 13 will be described.

Operation of closing the cartridge door 20 first and, then, closing the image reading portion 13 will be described. This operation is reverse of the above-mentioned operation of opening the cartridge door 20. That is, when the cartridge door 20 is closed and, thereafter, the image reading portion 13 is closed, the stopper abutment portion 13x of the image reading portion 13 pushes the tray abutment portion 300b of the stopper 300 so that the stopper 300 moves. When the image reading portion 13 moves to a closed position, a state is brought about where the stopper 300 moves to a restricting position in which the stopper 300 holds a state where the cartridge door 20 is closed, and the tray abutment portion 300b and the abutment portion 22a of the stopper receiving portion 22 abut against each other. With such operations, the cartridge door 20 is held in a closed state.

Next, operation of closing the image reading portion 13 and, thereafter, closing the cartridge door 20 will be described with reference to FIG. 11A, FIG. 11B, FIG. 11C and FIG. 11D. As shown in FIG. 11A, when the image reading portion 13 is closed first, the abutment portion 300c of the stopper 300 is pushed by the stopper abutment portion 13x of the image reading portion 13 so that the stopper 300 moves to a restricting position. Causing the cartridge door 20 to pivot in a direction indicated by arrow D in such a state allows the inclined surface 22b of the stopper receiving portion 22, which the cartridge door 20 includes, and the tray abutment portion 300b abut against each other.

When the cartridge door 20 is further pivoted in the direction indicated by arrow D, as shown in FIG. 11B, the tray abutment portion 300b receives a force from the inclined surface 22b to move along the inclined surface 22b. At this time of operation, the stopper abutment portion 13x of the image reading portion 13 and the abutment portion 300c of the stopper 300 temporarily separate from each other.

When the cartridge door 20 is further pivoted in the direction indicated by arrow D, as shown in FIG. 11C, the tray abutment portion 300b moves along the inclined surface 22c. Further, the stopper 300 pivots in a direction indicated by arrow E due to a biasing force of a spring not shown in the drawing.

When the cartridge door 20 is further pivoted in the direction indicated by arrow D so that the cartridge door 20 is pivoted to a closed state, as shown in FIG. 11D, the stopper 300 pivots in the direction indicated by arrow E due to a biasing force of the spring not shown in the drawing (FIG. 11C). With such pivoting, the stopper abutment portion 13x of the image reading portion 13 and the abutment portion 300c of the stopper 300 abut against each other again so that pivoting of the stopper 300 is restricted. When the stopper 300 is in a position in which pivoting of the stopper 300 is restricted, a state is brought about where the tray abutment portion 300b and the abutment portion 22a of the stopper receiving portion 22 abut against each other. Due to such abutment, pivoting of the cartridge door 20 is restricted, and the cartridge door 20 is held in a closed state.

As described above, the stopper 300 is configured to be movable in conjunction with the movement of the image reading portion 13 so that the stopper 300 with a small size can prevent a user from opening the cartridge door 20 unintentionally. Accordingly, manufacturing cost of the stopper 300 can be reduced.

Further, it is possible to prevent that a user opens the cartridge door 20 unintentionally and, as a result, operation of the image forming apparatus A stops. Accordingly, it becomes unnecessary to perform removal of a sheet staying due to stopping of the operation.

By providing the inclined surface 22b on the stopper receiving portion 22, the configuration is adopted where the cartridge door 20 is movable to a closed position in a state where the image reading portion 13 is closed and the stopper 300 is in a restricting position. Accordingly, either of the image reading portion 13 or the cartridge door 20 may be closed first. Therefore, a user is not required to pay attention to the order of handling and hence, usability is enhanced.

The image reading portion 13 is configured to be movable in the upward and downward direction. Accordingly, compared to a configuration where the image reading portion 13 is moved in a horizontal direction, an operation space for bringing the cartridge door 20 into an openable state can be reduced in size.

In this embodiment, a spring not shown in the drawing is used for biasing the stopper 300. However, substantially the same advantageous effects can be acquired even if the self-weight of the stopper 300 is utilized. Substantially the same advantageous effects can be also acquired even if a configuration is adopted where a guide member is provided, and the stopper 300 is caused to move along the guides of the guide member in the same manner as the stopper 200 in the second embodiment.

This application claims the benefit of Japanese Patent Application No. 2016-045694, filed March 9, 2016, and Japanese Patent Application No. 2017- 035720, filed February 28, 2017.

### [Reference Signs List]

12 discharge tray
13 image reading portion
13x stopper abutment portion
15 spring
17, 22 stopper receiving portion
18 guide hole
20 cartridge door
100, 200, 300 stopper
200a guide boss
A image forming apparatus

## Claims

1. An image forming apparatus (A) which forms an image on a sheet (S), the image forming apparatus (A) comprising:
an apparatus main body of the image forming apparatus (A);
an openable and closable member (12; 20) being supported on the apparatus main body in an openable and closable manner with respect to the apparatus main body, the openable and closable member (12; 20) including a receiving portion (17, 22);
an image reading portion (13) configured to read an image of an original, the image reading portion (13) being supported on the apparatus main body and being movable to a first open position and to a first closed position with respect to the apparatus main body, the first closed position having a positional relationship with respect to the apparatus main body different from the first open position; and
a stopper member (100; 200; 300) provided in the apparatus main body and configured to move in conjunction with a movement of the image reading portion (13), wherein
the stopper member (100; 200; 300) is configured to move to a restricting position in which the stopper member (100; 200; 300) abuts against the receiving portion (17, 22) so as to restrict the openable and closable member (12; 20) from being moved from a second closed position to a second open position when the image reading portion (13) is moved to the first closed position,
when the image reading portion (13) is in the first open position, the image reading portion (13) is separated from the stopper member (100, 200, 300), and
the stopper member (100; 200; 300) is configured to move to an allowing position in which the stopper member (100; 200; 300) separates from the receiving portion (17, 22) thereby bringing the openable and closable member to an openable state to allow the openable and closable member (12; 20) to be moved from the second closed position to the second open position when the image reading portion (13) is moved to the first open position.

2. The image forming apparatus (A) according to claim 1, wherein when the image reading portion (13) is moved from the first open position to the first closed position, the stopper member (100; 200; 300) is pushed by the image reading portion (13) so as to be moved to the restricting position.

3. The image forming apparatus (A) according to claim 1 or claim 2, wherein the stopper member (100; 200; 300) is provided in the apparatus main body in a pivotable manner, and pivots in conjunction with a movement of the image reading portion (13).

4. The image forming apparatus (A) according to any one of claim 1 to claim 3, wherein when the openable and closable member (12; 20) is moved toward the second closed position from a state in which the stopper member (100; 200; 300) is positioned in the restricting position and the openable and closable member (12; 20) is in the second open position, the stopper member (100; 200; 300) is moved from the restricting position, and when the openable and closable member (12; 20) arrives at the second closed position, the stopper member (100; 200; 300) is returned to the restricting position.

5. The image forming apparatus (A) according to any one of claim 1 to claim 4, wherein the apparatus main body includes a biasing means (15) for biasing the stopper member (100; 200; 300), and
wherein when the image reading portion (13) is moved from the first closed position to the first open position, the stopper member (100; 200; 300) is moved from the restricting position to the allowing position by a biasing force of the biasing means (15).

6. The image forming apparatus (A) according to any one of claim 1 to claim 4, wherein when the image reading portion (13) is moved from the first closed position to the first open position, the stopper member (100; 200; 300) is moved from the restricting position to the allowing position by a self-weight of the stopper member (100; 200; 300).

7. The image forming apparatus (A) according to any one of claim 1 to claim 6, wherein the openable and closable member (12; 20) comprises a discharge tray (12) configured to stack a sheet (S) discharged from an inside of the apparatus main body.

8. The image forming apparatus (A) according to claim 7, wherein the apparatus main body includes an interlock switch (IRSW), and
wherein a movable arm portion (IRSWa) of the interlock switch (IRSW) is disposed at a position closer to the stopper member (100; 200; 300) than a center of a sheet stacking area of the discharge tray (12) in a direction orthogonal to a sheet discharging direction.

9. The image forming apparatus (A) according to claim 8, wherein the movable arm portion (IRSWa) is disposed at a position closer to the stopper member (100; 200; 300) than the sheet stacking area.

10. The image forming apparatus (A) according to claim 8 or claim 9, wherein a sliding-type extension tray which extends the sheet stacking area in the sheet discharging direction is provided in the discharge tray (12).

11. The image forming apparatus according to any one of claim 1 to claim 10, wherein the image reading portion (13) includes an abutment portion (13x),
wherein when the image reading portion (13) is in the first closed position, the abutment portion (13x) abuts against the stopper member (100, 200, 300) such that the stopper member (100, 200, 300) is located in the restricting position, and
wherein when the image reading portion (13) is moved from the first closed position to the first open position, the abutment portion (13x) separates from the stopper member (100, 200, 300) such that the stopper member (100, 200, 300) is allowed to move from the restricting position to the allowing position.

12. The image forming apparatus according to any one of claim 1 to claim 11, wherein when the openable and closable member (12; 20) is in the second open position, a cartridge (P) disposed in the apparatus main body can be accessed.

## Patentansprüche

1. Bilderzeugungsvorrichtung (A), welche ein Bild auf einem Blatt (S) erzeugt, wobei die Bilderzeugungsvorrichtung (A) Folgendes aufweist:
einen Vorrichtungshauptkörper der Bilderzeugungsvorrichtung (A);
ein öffenbares und schließbares Element (12; 20), das an dem Vorrichtungshauptkörper auf eine öffenbare und schließbare Weise in Bezug auf den Vorrichtungshauptkörper abgestützt ist, wobei das öffenbare und schließbare Element (12; 20) einen Aufnahmeabschnitt (17, 22) aufweist;
einen Bildleseabschnitt (13), der konfiguriert ist, ein Bild eines Originals zu lesen, wobei der Bildleseabschnitt (13) an dem Vorrichtungshauptkörper abgestützt ist und zu einer ersten offenen Position und zu einer ersten geschlossenen Position in Bezug auf den Vorrichtungshauptkörper bewegbar ist, wobei die erste geschlossene Position eine Positionsbeziehung in Bezug auf den Vorrichtungshauptkörper hat, die unterschiedlich von der ersten offenen Position ist; und
ein Anschlagelement (100; 200; 300), das bei dem Vorrichtungshauptkörper vorgesehen ist und konfiguriert ist, sich im Zusammenwirken mit einer Bewegung des Bildleseabschnitts (13) zu bewegen, wobei
das Anschlagelement (100; 200; 300) konfiguriert ist, sich zu einer Beschränkungsposition zu bewegen, in welcher das Anschlagelement (100; 200; 300) an dem Aufnahmeabschnitt (17, 22) anliegt, um das öffenbare und schließbare Element (12; 20) darin zu beschränken, beim Bewegen des Bildleseabschnitts (13) zu der ersten geschlossenen Position von einer zweiten geschlossenen Position zu einer zweiten offenen Position bewegt zu werden,
wenn der Bildleseabschnitt (13) in der ersten offenen Position ist, der Bildleseabschnitt (13) von dem Anschlagelement (100, 200, 300) getrennt ist und
das Anschlagelement (100; 200; 300) konfiguriert ist, sich zu einer Freigabeposition zu bewegen, in welcher sich das Anschlagelement (100; 200; 300) von dem Aufnahmeabschnitt (17, 22) trennt, wodurch das öffenbare und schließbare Element zu einem öffenbaren Zustand gebracht wird, um dem öffenbaren und schließbaren Element (12; 20) zu ermöglichen, beim Bewegen des Bildleseabschnitts (13) zu der ersten offenen Position von der zweiten geschlossenen Position zu der zweiten offenen Position bewegt zu werden.

2. Bilderzeugungsvorrichtung (A) nach Anspruch 1, wobei beim Bewegen des Bildleseabschnitts (13) von der ersten offenen Position zu der ersten geschlossenen Position das Anschlagelement (100; 200; 300) durch den Bildleseabschnitt (13) gedrückt wird, um zu der Beschränkungsposition bewegt zu werden.

3. Bilderzeugungsvorrichtung (A) nach Anspruch 1 oder Anspruch 2, wobei das Anschlagelement (100; 200; 300) bei dem Vorrichtungshauptkörper auf eine schwenkbare Weise vorgesehen ist und im Zusammenwirken mit einer Bewegung des Bildleseabschnitts (13) schwenkt.

4. Bilderzeugungsvorrichtung (A) nach einem von Anspruch 1 bis Anspruch 3, wobei beim Bewegen des öffenbaren und schließbaren Elements (12; 20) von einem Zustand, in welchem das Anschlagelement (100; 200; 300) in der Beschränkungsposition positioniert ist und das öffenbare und schließbare Element (12; 20) in der zweiten offenen Position ist, in Richtung der zweiten geschlossenen Position das Anschlagelement (100; 200; 300) von der Beschränkungsposition bewegt wird, und beim Ankommen des öffenbaren und schließbaren Elements (12; 20) bei der zweiten geschlossenen Position das Anschlagelement (100; 200; 300) zu der Beschränkungsposition zurückgeführt wird.

5. Bilderzeugungsvorrichtung (A) nach einem von Anspruch 1 bis Anspruch 4, wobei der Vorrichtungshauptkörper ein Vorspannungsmittel (15) zum Vorspannen des Anschlagelements (100; 200; 300) aufweist und
wobei beim Bewegen des Bildleseabschnitts (13) aus der ersten geschlossenen Position zu der ersten offenen Position das Anschlagelement (100; 200; 300) durch eine Vorspannungskraft des Vorspannungsmittels (15) von der Beschränkungsposition zu der Freigabeposition bewegt wird.

6. Bilderzeugungsvorrichtung (A) nach einem von Anspruch 1 bis Anspruch 4, wobei beim Bewegen des Bildleseabschnitts (13) von der ersten geschlossenen Position zu der ersten offenen Position das Anschlagelement (100; 200; 300) durch ein Eigengewicht des Anschlagelements (100; 200; 300) von der Beschränkungsposition zu der Freigabeposition bewegt wird.

7. Bilderzeugungsvorrichtung (A) nach einem von Anspruch 1 bis Anspruch 6, wobei das öffenbare und schließbare Element (12; 20) ein Ausgabefach (12) aufweist, das konfiguriert ist, ein Blatt (S) zu stapeln, das von einer Innenseite des Vorrichtungshauptkörpers ausgegeben wird.

8. Bilderzeugungsvorrichtung (A) nach Anspruch 7, wobei der Vorrichtungshauptkörper einen Verriegelungsschalter (IRSW) aufweist und
wobei ein bewegbarer Armabschnitt (IRSWa) des Verriegelungsschalters (IRSW) bei einer Position angeordnet ist, die in einer Richtung, die senkrecht zu einer Blattausgaberichtung ist, näher an dem Anschlagelement (100; 200; 300) ist als eine Mitte eines Blattstapelbereichs des Ausgabefachs (12).

9. Bilderzeugungsvorrichtung (A) nach Anspruch 8, wobei der bewegbare Armabschnitt (IRSWa) bei einer Position angeordnet ist, die näher an dem Anschlagelement (100; 200; 300) ist als der Blattstapelbereich.

10. Bilderzeugungsvorrichtung (A) nach Anspruch 8 oder Anspruch 9, wobei ein gleitartiges Ausziehfach, welches den Blattstapelbereich in der Blattausgaberichtung erstreckt, bei dem Ausgabefach (12) vorgesehen ist.

11. Bilderzeugungsvorrichtung nach einem von Anspruch 1 bis Anspruch 10, wobei der Bildleseabschnitt (13) einen Anlageabschnitt (13x) aufweist,
wobei, wenn der Bildleseabschnitt (13) in der ersten geschlossenen Position ist, der Anlageabschnitt (13x) an dem Anschlagelement (100, 200, 300) anliegt, sodass sich das Anschlagelement (100, 200, 300) in der Beschränkungsposition befindet, und
wobei beim Bewegen des Bildleseabschnitts (13) von der ersten geschlossenen Position zu der ersten offenen Position der Anlageabschnitt (13x) sich von dem Anschlagelement (100, 200, 300) trennt, sodass dem Anschlagelement (100, 200, 300) ermöglicht ist, sich von der Beschränkungsposition zu der Freigabeposition zu bewegen.

12. Bilderzeugungsvorrichtung nach einem von Anspruch 1 bis Anspruch 11, wobei, wenn das öffenbare und schließbare Element (12; 20) in der zweiten offenen Position ist, auf eine Kartusche (P) zugegriffen werden kann, die bei dem Vorrichtungshauptkörper angeordnet ist.

## Revendications

1. Appareil de formation d'image (A) qui forme une image sur une feuille (S), l'appareil de formation d'image (A) comprenant :
un corps principal d'appareil de l'appareil de formation d'image (A) ;
un élément pouvant être ouvert et fermé (12 ; 20) supporté sur le corps principal d'appareil de façon à pouvoir être ouvert et fermé par rapport au corps principal d'appareil, l'élément pouvant être ouvert et fermé (12 ; 20) comprenant une partie de réception (17, 22) ;
une partie de lecture d'image (13) configurée pour lire une image d'un original, la partie de lecture d'image (13) étant supportée sur le corps principal d'appareil et pouvant être déplacée dans une première position ouverte et dans une première position fermée par rapport au corps principal d'appareil, la première position fermée ayant une relation de position par rapport au corps principal d'appareil différente de la première position ouverte ; et
un élément butée (100 ; 200 ; 300) disposé dans le corps principal d'appareil et configuré pour un déplacement conjointement avec un déplacement de la partie de lecture d'image (13), dans lequel
l'élément butée (100 ; 200 ; 300) est configuré pour être déplacé jusqu'à une position de restriction dans laquelle l'élément butée (100 ; 200 ; 300) est en butée contre la partie de réception (17, 22) de façon à restreindre un déplacement de l'élément pouvant être ouvert et fermé (12 ; 20) d'une seconde position fermée à une seconde position ouverte lorsque la partie de lecture d'image (13) est amenée dans la première position fermée,
lorsque la partie de lecture d'image (13) est dans la première position ouverte, la partie de lecture d'image (13) est séparée de l'élément butée (100, 200, 300), et
l'élément butée (100 ; 200 ; 300) est configuré pour être déplacé jusqu'à une position d'autorisation dans laquelle l'élément butée (100 ; 200 ; 300) est séparé de la partie de réception (17, 22), amenant ainsi l'élément pouvant être ouvert et fermé dans un état pouvant être ouvert pour permettre un déplacement de l'élément pouvant être ouvert et fermé (12 ; 20) de la seconde position fermée à la seconde position ouverte lorsque la partie de lecture d'image (13) est amenée dans la première position ouverte.

2. Appareil de formation d'image (A) selon la revendication 1, dans lequel, lorsque la partie de lecture d'image (13) est amenée de la première position ouverte à la première position fermée, l'élément butée (100 ; 200 ; 300) est poussé par la partie de lecture d'image (13) de façon à être amené dans la position de restriction.

3. Appareil de formation d'image (A) selon la revendication 1 ou la revendication 2, dans lequel l'élément butée (100 ; 200 ; 300) est disposé de manière à pouvoir pivoter dans le corps principal d'appareil, et pivote conjointement avec un déplacement de la partie de lecture d'image (13).

4. Appareil de formation d'image (A) selon l'une quelconque de la revendication 1 à la revendication 3, dans lequel, lorsque l'élément pouvant être ouvert et fermé (12 ; 20) est déplacé vers la seconde position fermée depuis un état dans lequel l'élément butée (100 ; 200 ; 300) est positionné dans la position de restriction et l'élément pouvant être ouvert et fermé (12 ; 20) est dans la seconde position ouverte, l'élément butée (100 ; 200 ; 300) est déplacé par rapport à la position de restriction, et lorsque l'élément pouvant être ouvert et fermé (12 ; 20) arrive au niveau de la seconde position fermée, l'élément butée (100 ; 200 ; 300) est ramené à la position de restriction.

5. Appareil de formation d'image (A) selon l'une quelconque de la revendication 1 à la revendication 4, dans lequel le corps principal d'appareil comprend un élément de sollicitation (15) destiné à solliciter l'élément butée (100 ; 200 ; 300), et
dans lequel, lorsque la partie de lecture d'image (13) est amenée de la première position fermée à la première position ouverte, l'élément butée (100 ; 200 ; 300) est amené de la position de restriction à la position d'autorisation par une force de sollicitation du moyen de sollicitation (15).

6. Appareil de formation d'image (A) selon l'une quelconque de la revendication 1 à la revendication 4, dans lequel, lorsque la partie de lecture d'image (13) est amenée de la première position fermée à la première position ouverte, l'élément butée (100 ; 200 ; 300) est amené de la position de restriction à la position d'autorisation par le propre poids de l'élément butée (100 ; 200 ; 300).

7. Appareil de formation d'image (A) selon l'une quelconque de la revendication 1 à la revendication 6, dans lequel l'élément pouvant être ouvert et fermé (12 ; 20) comprend un plateau de décharge (12) configuré pour empiler une feuille (S) déchargée depuis une partie intérieure du corps principal d'appareil.

8. Appareil de formation d'image (A) selon la revendication 7, dans lequel le corps principal d'appareil comprend un interrupteur d'interdiction (IRSW), et
dans lequel une partie bras mobile (IRSWa) de l'interrupteur d'interdiction (IRSW) est disposée à une position plus proche de l'élément butée (100 ; 200 ; 300) que d'un centre d'une zone d'empilement de feuilles du plateau de décharge (12) dans une direction orthogonale à un sens de décharge de feuilles.

9. Appareil de formation d'image (A) selon la revendication 8, dans lequel la partie bras mobile (IRSWa) est disposée à une position plus proche de l'élément butée (100 ; 200 ; 300) que de la zone d'empilement de feuilles.

10. Appareil de formation d'image (A) selon la revendication 8 ou la revendication 9, dans lequel un plateau à déploiement de type coulissant qui prolonge la zone d'empilement de feuilles dans le sens de décharge de feuilles est disposé dans le plateau de décharge (12).

11. Appareil de formation d'image selon l'une quelconque de la revendication 1 à la revendication 10, dans lequel la partie de lecture d'image (13) comprend une partie de mise en butée (13x),
dans lequel, lorsque la partie de lecture d'image (13) est dans la première position fermée, la partie de mise en butée (13x) est en butée contre l'élément butée (100, 200, 300) de sorte que l'élément butée (100, 200, 300) est situé dans la position de restriction, et
dans lequel, lorsque la partie de lecture d'image (13) est amenée de la première position fermée à la première position ouverte, la partie de mise en butée (13x) est séparée de l'élément butée (100, 200, 300) de sorte que l'élément butée (100, 200, 300) peut être amené de la position de restriction à la position d'autorisation.

12. Appareil de formation d'image selon l'une quelconque de la revendication 1 à la revendication 11, dans lequel, lorsque l'élément pouvant être ouvert et fermé (12 ; 20) est dans la seconde position ouverte, une cartouche (P) disposée le corps principal d'appareil peut faire l'objet d'un accès.
